# EUROPEAN PATENT SPECIFICATION

(11) **EP 1 338 139 B1**
(45) Date of publication and mention of the grant of the patent: **03.06.2009**
(21) Application number: 01980533.2
(22) Date of filing: 29.10.2001
(51) Int. Cl.: H04N 1/327

(54) **FACSIMILE MACHINE WITH AN OFF-HOOK DETECTING DEVICE**
FAKSIMILEGERÄT MIT EINEM SCHLEIFENSCHLUSSERKENNUNGSGERÄT
TELECOPIEUR POURVU D'UN DETECTEUR DE DECROCHAGE

(30) Priority: 08.11.2000 EP 00890331
(43) Date of publication of application: 27.08.2003
(73) Proprietor: Koninklijke Philips Electronics N.V., 5621 BA Eindhoven (NL)
(72) Inventor: SONNLEITHNER, Bernhard, NL-5656 AA Eindhoven (NL)
(74) Representative: Bloch, Gérard
(86) International application number: PCT/EP2001/012591
(87) International publication number: WO 2002/039723

(56) References cited:
- EP-A- 0 613 286
- EP-A- 0 847 181
- US-A- 4 802 207
- US-A- 5 684 874
- US-A- 5 706 342
- US-A- 5 949 860

## Description

The invention relates to an off-hook detecting device which can be connected to a telephone line, for detecting whether a communication arrangement, which is connected to the telephone line in parallel with the off-hook detecting device, has accepted an incoming call.

The incoming call is accepted by the off-hook detecting device when, if there is a call acceptance condition, no first off-hook detection information is available which information features that the parallel-connected communication arrangement has already accepted the incoming call.

The invention further relates to a method of checking whether a communication arrangement, which is connected to a telephone line in parallel with an off-hook detecting device implementing the method, has accepted an incoming call, whereas the incoming call is accepted by the off-hook detecting device when, if there is a call acceptance condition, no first off-hook detection information is available.

The invention further relates to a first facsimile machine which can be connected to a telephone line, which machine is arranged for communicating with a second facsimile machine which is connected to the first facsimile machine over a telephone network.

Such an off-hook detecting device, such a method and such a facsimile machine are known from the document U.S. Pat. No. 5,521,974. The known facsimile machine includes an off-hook detecting device for detecting whether the user of a telephone set connected to the same telephone line in parallel with the facsimile machine has already accepted an incoming call. When the user of the telephone set has accepted the call, the input resistance of the telephone set diminishes from a very large input resistance to about 5000MEGA to 6000MEGA , as a result of which the voltage value of the DC component of the telephone signal received over the telephone line drops.

To detect whether the user of the telephone set has accepted the call, the known off-hook detecting device of the known facsimile machine therefore checks whether the voltage value of the DC component of the telephone signal on the telephone line has diminished and dropped below a first off-hook threshold. The known facsimile machine stores the time lapses during which the hook was lifted and prints the duration of these time lapses with a printer of the facsimile machine if so desired by the user. Furthermore, the known facsimile machine accepts a call for setting up a facsimile protocol with another facsimile machine only when there is a condition of call acceptance and the parallel-connected telephone set has not yet accepted the call previously.

It has turned out that the voltage value of the DC component of the telephone signal depends on the type of the telephone line and other factors. Therefore, the known facsimile machine with the off-hook detector has the disadvantage that the facsimiles machine does not take an incoming call, because the off-hook detector erroneously assumes that the parallel connected telephone set has already taken the call.

It is known from the patent application EP 0 613 286 A1, a communication apparatus in which the voltage variation ΔV is detected via a hook detector.

The patent US 5,949,860 teaches a method for receiving facsimile in which the user accepts reception of the facsimile message.

It is an object of the invention to provide an off-hook detecting device in which the disadvantages mentioned above are avoided. To achieve this object, such an off-hook detecting device is provided with features according to the invention, so that the off-hook detecting device can be characterized by the manner described hereinafter.

An off-hook detecting device which can be connected to a telephone line, for detecting whether a communication arrangement, which is connected to the telephone line in parallel with the off-hook detecting device, has accepted an incoming call, comprising a ringing signal detector for producing ringing signal detection information when the ringing signal detector detects a ringing signal in a telephone signal of the incoming call, and an off-hook detector for producing first off-hook detection information when the voltage value of the DC component of the received telephone signal has dropped below a first off-hook threshold, and comprising off-hook means for accepting the incoming call when, if there is a call accept condition, the first off-hook detection information does not appear, while the off-hook detecting device is provided for accepting an incoming call for at least a subsequent error period if the ringing signal detection information and the first off-hook detection information appears, in essence, at the same time, even when the accept condition and the first off-hook detection information for accepting an incoming call is present at the same time.

It is a further object of the invention to provide a method with which the disadvantages mentioned above are avoided. To achieve, this object, features according to the invention are provided with such a method, so that the method may be characterized in the following manner.

A method of checking whether a communication arrangement, which is connected to a telephone line in parallel with an off-hook device implementing the method, has accepted an incoming call, in which method the following steps are executed:
producing ringing signal detection information when a ringing signal is detected in a telephone signal of the incoming call;
producing ringing signal detection information when a ringing signal is detected in a telephone signal of the incoming call;
producing first off-hook detection information when the voltage value of the DC component of the received telephone signal has dropped below a first off-hook threshold;
accepting the incoming call if, after a condition of call acceptance is present, the first off-hook detection information is not present, whereas an incoming call is accepted when the ringing signal detection information and the first off-hook detection information is present at the same time for at least a subsequent error period, even when the condition of call acceptance and the first off-hook detection information appears at the same time.

It is a further object of the invention to provide a facsimile machine in which the disadvantages mentioned above are avoided. To achieve this object, such a facsimile machine has features according to the invention, so that the facsimile machine is characterized in the manner described hereinafter.

A first facsimile machine which can be connected to a telephone line for communication with another, second facsimile machine connected to a telephone line, which second facsimile machine comprises transceiver means for transmitting and receiving fax data which correspond to a fax protocol, in which an off-hook device as claimed in claim 1 is provided for detecting whether a communication arrangement connected to the telephone line in parallel with the first facsimile machine has accepted an incoming call.

Since a telephone provider never sends a ringing signal in a telephone signal when a communication arrangement connected to the telephone line has already accepted the call, there is an erroneous state when the off-hook detector indicates that the parallel-connected communication arrangement has already lifted the receiver and a ringing signal is detected by the ringing signal detector. Therefore, according to the invention the off-hook detector is mistrusted for at least an error interval following the error state and if there is a condition of call acceptance an incoming call is then accepted also when the first off-hook detection information from the off-hook detector is present. This offers the advantage that once an error state has set in, which actually should not have occurred, the off-hook device accepts the telephone call as a precaution when there is a condition of call acceptance.

According to the measures of claim 2 and of claim 8, the advantage is obtained that a call already accepted by the off-hook device is not transferred to the parallel-connected communication arrangement if the error state has already occurred once. This avoids that fluctuations of the voltage value of the DC component of the received telephone signal during the check whether the received telephone signal contains a CNG tone (Calling Tone) which features the beginning of a facsimile transmission, erroneously lead to delivering the call to the parallel-connected communication arrangement. This also advantageously avoids that a call delivered by the off-hook device to an answering machine connected downstream of the off-hook device is erroneously delivered to the parallel-connected communication arrangement as a result of fluctuations of the voltage value of the DC component of the received telephone signal.

According to the measures of claim 3 and claim 9 the advantage is obtained that the off-hook threshold is continuously adapted to fluctuating influences. Such influences may be caused by changes of the transmission properties of the telephone line or by the parallel-connected telephone set.

According to the measures of claim 4 the advantage is obtained that the off-hook device terminates the erroneous state at any rate if it is separated from the power supply and, as the case may be, is connected to another telephone line with another parallel-connected communication arrangement. In that case the first off-hook threshold and the second off-hook threshold are trusted to be capable of distinguishing whether the parallel-connected communication arrangement has accepted the call.

According to the measures as claimed in claim 5, a simple and practical call acceptance condition is obtained.

According to the measures as claimed in claim 6 a cost-effective off-hook detector is obtained which is also simple to realize.

According to the measures of claim 11 the advantage is obtained that the user recognizes from the displayed warning signal that the error state has set in. This explains to the user, on the one hand, why the facsimile machine temporarily takes a call, although the user has already lifted the receiver of the parallel-connected telephone set and, on the other hand, the user can end the error state and effect a new check and adaptation of the off-hook thresholds by removing the plug of the facsimile machine from the power outlet and subsequently plugging the facsimile machine into the power outlet again.

These and other aspects of the invention are apparent from and will be elucidated with reference to the embodiments described hereinafter.

In the drawings:
Fig. 1 shows a facsimile machine which is connected to a telephone line of a telephone network in parallel with a telephone set and which includes an off-hook device for detecting whether an incoming call is accepted by the parallel-connected telephone set.
Figs. 2 show signal waveforms which occur during operation in the facsimile machine shown in Fig. 1, and
Fig. 3 shows the waveform of the voltage value of the DC component of the telephone signal received from the facsimile machine.

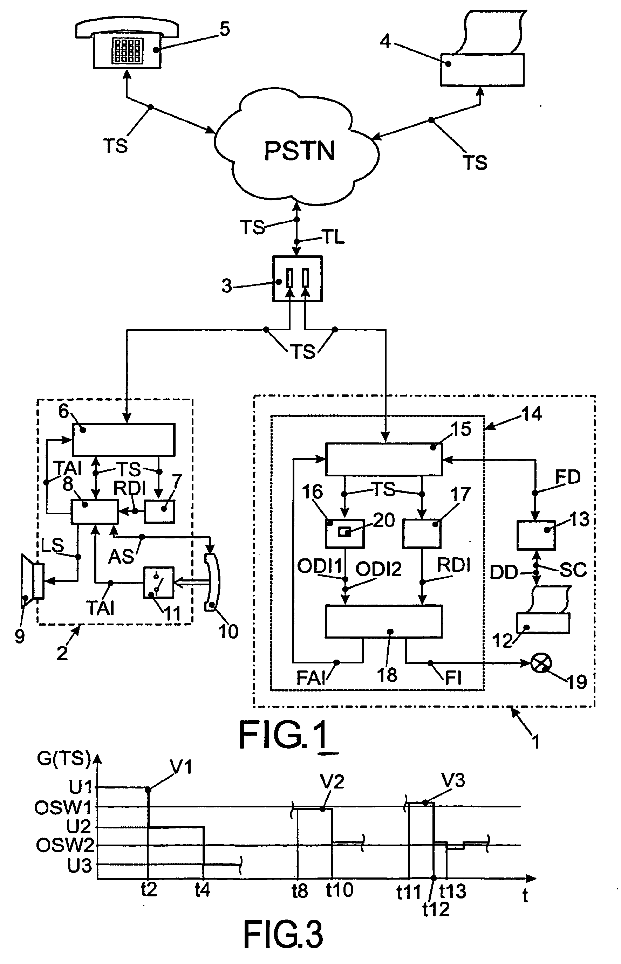

Fig. 1 shows a facsimile machine 1 and a telephone set 2 which are both connected to a telephone outlet 3 and form communication arrangements. The facsimile machine 1 and the telephone set 2 are connected in parallel to a telephone line TL of a telephone network PSTN via the telephone outlet 3 and can only be called by the same telephone number. The telephone network PSTN is operated by a telephone provider and includes switching stations and further arrangements customary in telephone networks to set up a telephone link between communication arrangements. To the telephone network PSTN are further connected a further facsimile machine 4 and a further telephone set 5, which also form communication arrangements.

The commercially available telephone set 2 includes an interface 6, a ringing signal detector 7, a telephone signal processing means 8, a loudspeaker 9 and a telephone receiver 10 which a user of the telephone set 2 can lift from a cradle switch 11 of the telephone set 2 to accept an incoming call. When the telephone receiver 10 lies on the cradle switch 11, the interface 6 builds up practically an infinitely large input resistance RT for a telephone signal TS received over the telephone line TL. When the user of the telephone set 2 lifts the telephone receiver 10 from the cradle switch 11, the interface 6 forms an about 500Ω to 600Ω ohmic input resistance RT of the telephone set 2.

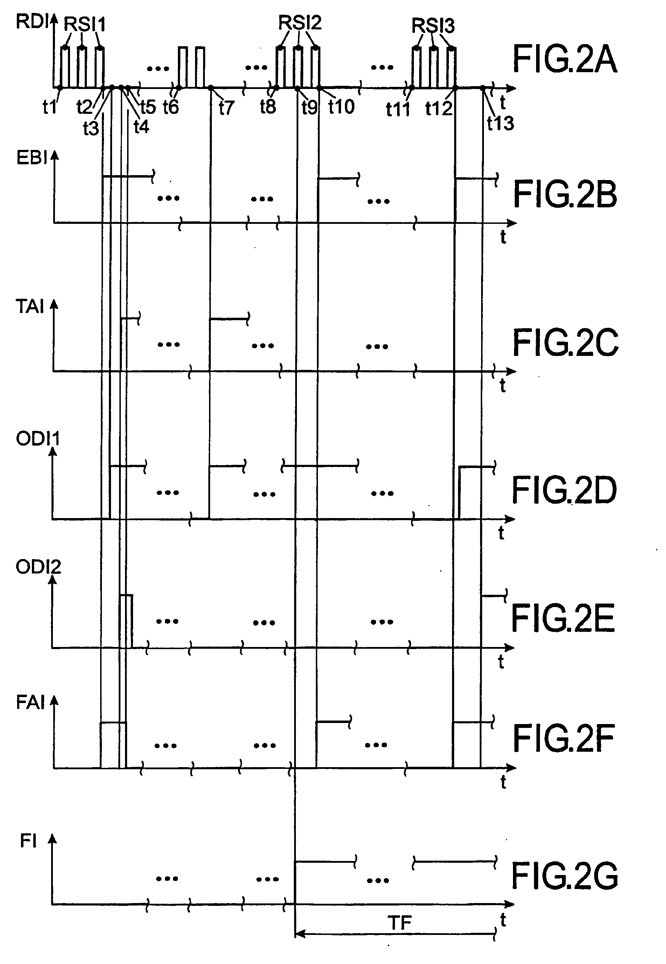

The telephone signal TS received by the interface 6 can be delivered by the interface 6 both to the ringing signal detector 7 and to the telephone signal processing means 8. The ringing signal detector 7 is arranged for detecting whether the received telephone signal TS contains a ringing signal which has a certain sequence of frequency tones as this is generally known. During the detection of the ringing signal in the received telephone signal TS, the ringing signal detector 7 produces ringing signal pulses RSI in ringing signal detection information RDI delivered by the ringing signal detector 7. Such ringing signal detection information RDI is shown in Fig. 2A. The ringing signal detection information RDI delivered by the ringing signal detector 7 can be applied to the telephone processing means 8.

The telephone processing means 8 are arranged for processing the delivered telephone signal TS. The telephone signal processing means 8 delivers a sound signal LS to the loudspeaker 9 for each received ringing signal pulse RSI. When the telephone receiver 10 is lifted from the cradle switch 11, the cradle switch 11 can deliver telephone pick-up information TAI to the telephone signal processing means 8 and from there to the interface 6. In that case the interface 6 changes the input resistance RT of the telephone set 2.

If the call was taken by the telephone set 2, an audio signal AS processed by the telephone processing means 8 can be delivered to a loudspeaker of the telephone receiver 10, which audio signal AS was received in the telephone signal TS. Furthermore, in that case the audio signal AS delivered by a microphone of the telephone receiver 10 is inserted in the telephone signal RTS via the telephone processing means 8 and the interface 6. In this manner the user of the telephone set 2 can make a telephone call with a user of the further telephone set 5.

The facsimile machine 1 comprises printer/scanner means 12 to scan a sheet of paper inserted into the printer/scanner means 12 and deliver scan data SC corresponding to the typeface on the sheet of paper. Printed data received from the printer/scanner means 12 are printed on a sheet of paper as this is generally known with facsimile machines.

The facsimile machine 1 further includes fax data processing means 13 which check in this respect a telephone signal TS delivered to the fax data processing means 13 for containing a CNG tone (calling tone) of 1.1 kHz, which features the beginning of the transmission of fax data FD. If the CNG tone is detected during this check, a fax protocol is then executed for the communication with the facsimile machine 4. When this fax protocol is executed, fax data FD received in the telephone signal TS are delivered to the fax data processing means 13 and, after being processed there, delivered to the printer/scanner means 12 as printer data DD. Furthermore, the scan data SD detected by the printer/scanner means 12 are processed by the fax data processing means 13 and delivered as fax data FD to be inserted into the telephone signal TS and sent, for example, to the facsimile machine 4.

In accordance with a user's expected functionality of the facsimile machine 1 and of the parallel-connected telephone set 2, an incoming call should automatically be accepted by the facsimile machine 1 when there is a call acceptance condition of the facsimile machine 1, only when the user has not yet accepted the call by lifting the telephone receiver 10. There is a call acceptance condition of the facsimile machine 1 when three complete ringing signal pulses RI are detected in the received telephone signal TS, which will be further discussed hereinafter with reference to an example of embodiment. Furthermore - according to the expected functionality of the two machines - the facsimile machine 1 gives a call it has already accepted to the parallel-connected telephone set 2 when the user of the telephone set 2 lifts the telephone receiver 10 and the fax data processing means 13 just check whether the telephone signal contains the CNG tone.

For enabling this functionality, the facsimile machine 1 includes an off-hook detecting device 14 for detecting whether the user of the telephone set 2 connected to the telephone line TL in parallel with the facsimile machine 1 has accepted an incoming call. For this purpose, the off-hook device 14 includes an interface 15, an off-hook detector 16, a ringing signal detector 17 and off-hook means 18. The operation of the ringing signal detector 17 corresponds to the previously described operation of the ringing signal detector 7.

The interface 15 forms a practically infinitely high input resistance RF for the telephone signal TS when the facsimile machine 1 has not accepted an incoming call. When the off-hook means 18 deliver fax off-hook information FAI to the interface 15, the interface 15 takes the call and forms - just like the interface 6 of the telephone set 2 - a 500 Ω to 600 Ω-large ohmic input resistance RF of the facsimile machine 1.

Fig. 3 shows a first waveform V1 of the voltage value of the DC component G(TS) of the telephone signal TS of an incoming call. Up to an instant t2, neither the facsimile machine 1, nor the telephone set 2 has taken the call, as a result of which both interfaces 6 and 15 have a practically infinitely large input resistance and the voltage value U1 of the DC component G(TS) of the telephone signal TS is about 48 volts. This voltage value U1, however, depends on the type of telephone line TL (for example, private branch exchange) and other influences which will be further discussed hereinafter.

At instant t2 the facsimile machine 1 takes the call, so that the telephone signal TS is loaded with the input resistance RF of the facsimile machine 1, as a result of which the voltage value of the DC component G(TS) of the telephone signal TS drops to a voltage value U2. From this instant t2 on, the fax data processing means 13 check whether the CNG tone is detected in the telephone signal TS. At an instant t4 the user of the telephone set 2 now additionally lifts the receiver 10, so that the telephone signal TS is loaded with the parallel combination of the input resistors RF and RT, as a result of which the voltage value of the DC component G(TS) of the telephone signal TS drops to a voltage value U3.

The off-hook detector 16 is provided for producing first off-hook detection information ODI1 when the voltage value of the DC component G(TS) of the telephone signal TS is smaller than a first off-hook threshold OSW1. Furthermore, the off-hook detector 16 is provided for producing second off-hook detection information ODI2 when the voltage value of the DC component G(TS) of the telephone signal TS is smaller than a second off-hook threshold OSW2. For this purpose, the off-hook detector 16 includes a voltage comparator for comparing DC voltages.

The off-hook means 18 are provided for processing the ringing signal detection information RDI produced by the ringing signal detector 17 and the off-hook detection information OSI1 and ODI2 and for taking the incoming call when, after the acceptance condition is present, the ringing signal detection information RDI1 is present and the first off-hook detection information ODI1 is not. Furthermore, the off-hook means 18 are arranged for activating an error mode of the facsimile machine 1 when, in essence, the ringing signal detection information RDI and the first off-hook detection information ODI occurs at the same time.

The error mode in the facsimile machine 1 is shown to the user by a diode 19 and remains activated for a subsequent error interval TF. When the error mode is activated, the off-hook means 18 are arranged for accepting an incoming call even when the acceptance condition and the first off-hook detection information ODI occurs at the same time. The advantages resulting from this will be further discussed hereinafter with reference to the example of embodiment in which the signal waveforms shown in Fig. 2 occur in the facsimile machine 1.

According to the example of embodiment it is assumed that the user of the telephone set 5 at an instant t1 has dialed the telephone number of the facsimile machine 1 and of the telephone set 2 and that the DC component G(TS) of the telephone signal TS of the incoming call has a regular voltage value of about 48 volts. Subsequently, both the ringing signal detector 7 and the ringing signal detector 17 produce first ringing signal pulses RSI1 shown in Fig. 2A. The telephone set 2 rings three times and the off-hook means 18 of the facsimile machine 1 ascertain after the third ringing signal pulse RSI1- at instant t2 - the presence of the call accept condition, after which acceptance information EBI shown in Fig. 2B adopts a high voltage value.

Since at instant t2 the first off-hook detection information ODI1 of the off-hook detector 16 is not present, the off-hook means 18 deliver the fax off-hook information FAI to the interface 15 to accept the call. From this instant t2 onwards the off-hook means 18 check the presence of the second off-hook detection information ODI2 to ascertain whether the user of the telephone set 2 has lifted the telephone receiver 10 to take the call. This is necessary because by lifting the receiver of the facsimile machine 1, the voltage value of the DC component G(TS) has already fallen below the first off-hook threshold OSW1 and, therefore, from an instant t3 onwards, the off-hook detector 16 delivers the first off-hook detection information ODI1.

At the instant t4 the user of the telephone set 2 lifts the receiver 10 to take the call, after which the voltage value of the DC component G(TS) of the telephone signal TS falls below the second off-hook threshold OSW2 and the second off-hook detection information ODI2 is delivered to the off-hook means 18.

Since the fax data processing means 13 have not yet received the CNG tone at instant t4, the off-hook means 18 terminate at an instant t5 the delivery of the fax off-hook information FAI to the interface 15, after which the facsimile machine 1 delivers the already taken call to the telephone set 2 and the input resistance RF of the facsimile machine 1 again becomes infinitely large.

This offers the advantage that the user of the telephone set 2 - even when he does not lift the receiver until after the third ringing tone - can take the telephone call, because the facsimile machine 1 delivers the call to the telephone set 2. This functionality corresponds to that which the user expects from the facsimile machine 1 and the telephone set 2.

Furthermore, the functionality desired by the user corresponds to the fact that a call coming in at an instant t6 which - after two ringing tones - is taken by the telephone set 2 at an instant t7, is no longer taken by the facsimile machine 1, because the call accept condition is not satisfied.

According to the example of embodiment it is assumed that the telephone line TL to which the telephone outlet 3 is connected, forms part of a private branch exchange which is connected to the telephone network PSTN. It is furthermore assumed that the voltage value of the DC component G(TS) of the telephone signal TS in the private branch exchange is already found to be below the off-hook threshold OSW1, although neither the telephone set 2 nor the facsimile machine 1 has taken the call. Fig. 3 shows a second waveform V2 corresponding to these assumptions of the voltage value of the DC component G(TS) of the telephone signal TS.

At an instant t8 the user of the facsimile machine 4 sends a fax to the facsimile machine 1 after which the telephone set 2 rings and the ringing signal detectors 7 and 17 produce second ringing signal pulses RSI2. Since - as shown in Fig. 3 - the voltage value of the DC component G(TS) of the telephone signal TS already at the instant t8 is smaller than the first off-hook threshold OSW1, the off-hook detector 16 continuously delivers the first off-hook detection information ODI1 to the off-hook means 18, although there is no telephone set off-hook information TAI available in the telephone set 2. Therefore, due the evaluation of the first off-hook detection information ODI1, the off-hook means 18 cannot ascertain whether the parallel-arranged telephone set 2 has already taken the call.

The off-hook means 18 are provided for ascertaining an error state and activating the error mode in the facsimile machine 1 when ringing signal pulses RSI and the first off-hook detection information ODI1 occur substantially simultaneously, because the telephone provider of the telephone network PSTN sends the ringing signal in the telephone signal TS only when the call is not taken by any communication arrangement. The off-hook means 18 therefore ascertain the error state at an instant t9 and generate error information FI featuring this error state, which error information is shown in Fig. 2G. Advantageously, the activation of the error mode of the facsimile machine 1 is shown to the user by means of the diode 19.

At an instant t10 the call accept condition is satisfied and the off-hook means 18 are arranged, despite the presence of the first off-hook detection information ODI1, for taking the incoming call, because the error mode is activated.

This offers the advantage that the off-hook device 14 of the facsimile machine 1 takes the call containing the facsimile data FD, although the off-hook device 14 should assume on the basis of the first off-hook detection information ODI1 that the telephone set 2 has already accepted the call. This advantageously achieves that the facsimile machine 1 also connected to a private branch exchange functions reliably and takes calls.

The error mode now advantageously continues to be activated in the facsimile machine 1 until the facsimile machine 1 is separated from the power supply. This determines the end of the error interval TF, because the facsimile machine 1 is cut off from the power supply. This offers the advantage that after the facsimile machine 1, which has been plugged into another telephone outlet after it has been connected to the power supply again, does not work in the error mode and for once trusts the first off-hook detection information ODI1.

At an instant t11 the user of the facsimile machine 4 again sends a fax to the facsimile machine 1, after which the telephone set 2 rings and the ringing signal detectors 7 and 17 produce third ringing signal pulses RSI3. It is assumed that the voltage value of the DC component G(TS) of the telephone signal TS lies just above the first off-hook threshold OSW1 as this is shown in Fig. 3 by a third waveform V3 of the DC component G(TS). Furthermore it is assumed that the error mode is activated in the facsimile machine 1.

At an instant t12 the call accept condition is present and the off-hook means 18 deliver the fax off-hook information FAI to the interface 15, because the first off-hook detection information ODI1 is not present and, in addition, also the error information FI is present. As is obvious from the third waveform V3, after the receiver of the facsimile machine 1 has been lifted, the voltage value of the DC component G(TS) of the telephone signal TS is only slightly larger than the second off-hook threshold OSW2.

At an instant t13 there is a slight reduction of the voltage value of the DC component G(TS) of the telephone signal TS as a result of a voltage variation in the private branch exchange during the check whether the CNG tone in the telephone signal TS is received. In this way the voltage value of the DC component G(TS) of the telephone signal TS drops below the second off-hook threshold OSW2. The off-hook means 18 are arranged for keeping the call when the error mode is activated in the facsimile machine 1, which call is thus not transferred to the telephone set 2 despite the presence of the second off-hook detection information ODI2.

This offers the advantage that when the error state has already been detected, slight voltage variations on the telephone line TL do not interrupt the test whether the CNG tone is received, and the subsequent transmission of the fax data FD. The facsimile machine 1 thus receives without disturbances the fax data FD sent by the facsimile machine 4.

In the off-hook detector 16 of the off-hook device 14, threshold adaptation means 20 are additionally provided, which are arranged for analyzing the time curve of the voltage value of the DC component G(TS) of the telephone signal TS during an analysis period. The threshold adaptation means 20 are arranged for adapting the first off-hook threshold OSW1 and the second off-hook threshold OSW2 as a result of the analysis, to enable a reliable detection of the acceptance of the incoming call by the parallel-arranged telephone set 2.

During the analysis period of one day, the threshold adaptation means 20 follow the voltage value of the DC component G(TS) of the telephone signal TS and determine the voltage values when a call comes in and no/one/the two machines have accepted the call. After the analysis period the off-hook thresholds OSW1 and OSW2 are adapted and put in between the determined voltage values (see waveform V1).

This offers the advantage that the off-hook thresholds OSW1 and OSW2 are continuously adapted to changing influences. Such influences may be caused by changes of the transmission properties of the telephone line TL or by the parallel-connected telephone set 2.

It may be observed that the call accept condition of the facsimile machine may be laid down also after the first, fifth or tenth ringing signal pulse. For the expert also other call accept conditions are obvious.

It may be observed that the off-hook device may be provided in any known communication arrangement. As communication arrangements for communication over the telephone network are known, for example, the following apparatus: telephone set, modem, answering machine or computer.

It may be observed that the telephone network PSTN shown in Fig. 1 may be both a public telephone network and a private branch or business telephone network.

It may be observed that the end of the error interval TF may also be determined to be an hour, a day or three weeks after the activation of the error mode.

It may be observed that the analysis period could also be determined by the occurrence of at least three calls. The threshold adaptation means 20 would then analyze the voltage values of the DC component G(TS) of the telephone signal TS, which have occurred during the past three calls.

It may be observed that in the activated error mode a call already transferred by the off-hook device to an answering machine downstream of the off-hook device is not erroneously transferred to the parallel-connected telephone set because of variations of the voltage value of the DC component of the received telephone signal. This advantageously achieves that the recording of a call with the answering machine is not interrupted.

## Claims

1. An off-hook detecting device (14) which can be connected to a telephone line (TL), for detecting whether a communication arrangement (2), which is connected to the telephone line (TL) in parallel with the off hook detecting device (14), has accepted an incoming call, comprising a
- ringing signal detector (17) adapted to produce ringing signal detection information (RDI) when the ringing signal detector (17) detects a ringing signal in a telephone signal (TS) of the incoming call, and an
- off-hook detector (16) adapted to produce first off-hook detection information (ODI1) when the voltage value of the DC component (G(TS)) of the received telephone signal (TS) has dropped below a first off-hook threshold (OSW1), and **characterized in that** the off-hook detecting device (14) comprises
- off-hook means (18) adapted to ascertain the presence of a call accept condition (EBI) when a number of ringing signal pulses (RSI) are detected in the ringing signal of the incoming call, and adapted to accept the incoming call if the first off-hook detection information (ODI1) is not present when there is a call accept condition (EBI),
wherein the off-hook detecting device (14) is adapted to ascertain an error period (TF) when ringing signal pulses RSI are received while first off-hook detection information (ODI1) is present, and adapted to accept an incoming call during the error period (TF), even if the call accept condition (EBI) is present at the same time as the first off-hook detection information (ODI1).

2. An off-hook device (14) as claimed in claim 1, in which the off-hook detector (16) is arranged for producing second off-hook detection information (ODI2) when the voltage value of the DC component (G(TS)) of the received telephone signal (TS) has dropped below a second off-hook threshold (OSW2), -the off-hook means (18) are arranged for transferring the accepted incoming-call to the parallel-connected communication arrangement (2) when, after the acceptance of the incoming call, the second off hook detection information (ODI2) is present, and the off -hook means (18) are arranged not to transfer the accepted incoming call from the off - hook device (14) to the parallel-connected communication arrangement (2) at least during error period (TF) even if the second off-hook detection information (ODI2) is present.

3. An off-hook device (14) as claimed in claim 1, in which threshold adaptation means (20) are provided which are arranged for analyzing the time-dependent waveform of the voltage value of the DC component (G(TS)) of the telephone signal (TS) during an analysis period and as a result of the analysis is arranged for adapting the first off-hook threshold (OSW1) and the second off hook threshold (OSW2), to enable a reliable detection of the acceptance of the incoming call by the parallel-connected communication arrangement (2).

4. An off hook device (14) as claimed in claim 1, in which the end of the error period (TF) is determined to be when the off-hook device is separated from its power supply.

5. An off-hook device (14) as claimed in claim 1, in which the off-hook means (18) are arranged for checking the presence of the call accept condition (EBI) which is present when N ringing signal pulses (RSI) are detected in the ringing signal of the incoming call.

6. An off hook device 14 as claimed in claim 1, in which the off-hook detector (16) includes a voltage comparator adapted to compare the voltage value of the DC component (G(TS)) of the telephone signal (TS) with the voltage value of the first off-hook threshold (OSW1) or the second off-hook threshold (OSW2), respectively.

7. A method of checking whether a communication arrangement (2), which is connected to a telephone line (TL) in parallel with an off-hook device (14) implementing the method, has accepted an incoming call, in which method the following steps are executed:
- producing ringing signal detection information (RDI) when a ringing signal is detected in a telephone signal (TS) of the incoming call;
- producing first off-hook detection information (ODI1) when the voltage value of the DC component (G(TS)) of the received telephone signal (TS) has dropped below a first off-hook threshold (OSW1);
- ascertaining the presence of a call accept condition (EBI) when a number of ringing signal pulses are detected in the ringing signal of the incoming call,
- ascertaining an error period (TF) when ringing signal pulses RSI are received while first off-hook detection information (ODI1) is present,
- accepting the incoming call if the first off-hook detection information (ODI1) is not present, and
- accepting an incoming call during the error period (TF) when first off-hook detection information (ODI1) is present, even if the call accept condition (EBI) is present at the same time as the first off-hook detection information (ODI1).

8. A method as claimed in claim 7, in which second off -hook detection information (ODI2) is produced when the voltage value of the DC component (G(TS)) of the received telephone signal (TS) has dropped below a second off-hook threshold (OSW2) and in which the accepted incoming call is transferred from the off hook device (14) to the parallel-connected communication arrangement (2) when after the acceptance of the incoming call the second off -hook detection information (ODI2) is present and while, at least during the error period (TF), the accepted incoming call is not transferred from the off -hook-device (14) to the parallel-connected communication arrangement (2) at least-during error period (TF) even when the second off-hook detection information (ODI2) is present.

9. A method as claimed in claim 7, in which during an analysis period the timedependent waveform of the voltage value of the DC component (G(TS)) of the telephone signal (TS) is analyzed and, as a result of the analysis, the first off-hook threshold (OSW1) and the second off hook threshold (OSW2) are adapted for reliably detecting the acceptance of the incoming call by the parallel-connected communication arrangement (2).

10. A first facsimile machine (1) which can be connected to a telephone line (TL) for communication with another, second facsimile machine (4) connected to a telephone line (TL), and comprising transceiver means (13, 15) for transmitting and receiving fax data (FD) which correspond to a fax protocol, in which an off- hook device (14) as claimed in claim 1 is provided for detecting whether a communication arrangement (2) connected to the telephone line (TL) in parallel with the first facsimile machine (1)has taken an incoming call.

11. A first facsimile machine (1) as claimed in claim 10 in which display means (19) are provided for displaying a warning signal during the error period (TF).

## Patentansprüche

1. Anreizerkennungsvorrichtung (14), die mit einer Telefonleitung (TL) verbunden werden kann, zum Erkennen, ob eine Kommunikationsanordnung (2), die parallel zu der Anreizerkennungsvorrichtung (14) mit der Telefonleitung (TL) verbunden ist, einen Anruf angenommen hat, umfassend einen
- Freizeichendetektor (17) zum Erzeugen von Freizeichenerkennungsinformationen (RDI), wenn der Freizeichendetektor (17) ein Freizeichen in einem Telefonsignal (TS) des Anrufs erkennt, und einen
- Anreizdetektor (16) zum Erzeugen erster Anreizerkennungsinformationen (ODI1), wenn der Spannungswert der Gleichstromkomponente (G(TS)) des empfangenen Telefonsignals (TS) unter einen ersten Anreizschwellwert (OSW1) abgefallen ist, und **dadurch gekennzeichnet, daß** die Anreizerkennungsvorrichtung (14)
- Anreizmittel (18) zum Bestimmen der Gegenwart eines Rufannahmezustands (EBI), wenn eine Anzahl von Freizeichenimpulsen (RSI) im Freizeichen des Anrufs erkannt werden, und zum Annehmen des Anrufs, wenn die ersten Anreizerkennungsinformationen (ODI1) nicht vorhanden sind, wenn ein Rufannahmezustand (EBI) besteht, umfaßt,
wobei die Anreizerkennungsvorrichtung (14) zum Bestimmen einer Fehlerperiode (TF) eingerichtet ist, wenn Freizeichenimpulse (RSI) bei Vorhandensein erster Anreizerkennungsinformationen (ODI1) empfangen werden, und zum Annehmen eines Anrufs während der Fehlerperiode (TF) eingerichtet ist, selbst wenn der Rufannahmezustand (EBI) zur gleichen Zeit wie die ersten Anreizerkennungsinformationen (ODI1) vorhanden ist.

2. Anreizerkennungsvorrichtung (14) nach Anspruch 1, wobei der Anreizdetektor (16) zum Erzeugen zweiter Anreizerkennungsinformationen (ODI2) angeordnet ist, wenn der Spannungswert der Gleichstromkomponente (G(TS)) des empfangenen Telefonsignals (TS) unter einen zweiten Anreizschwellwert (OSW2) abgefallen ist, das Anreizmittel (18) zum Übertragen des angenommenen Anrufs an die parallel geschaltete Kommunikationsanordnung (2) angeordnet ist, wenn nach Annahme des Anrufs die zweiten Anreizerkennungsinformationen (ODI2) vorhanden sind, und das Anreizmittel (18) zum Nichtübertragen des angenommenen Anrufs von der Anreizerkennungsvorrichtung (14) zu der parallel geschalteten Kommunikationsanordnung (2) mindestens während der Fehlerperiode (TF) angeordnet ist, selbst wenn die zweiten Anreizerkennungsinformationen (ODI2) vorhanden sind.

3. Anreizvorrichtung (14) nach Anspruch 1, wobei Schwellwertanpassungsmittel (20) vorgesehen sind, die zum Auswerten der zeitabhängigen Wellenform des Spannungswerts der Gleichstromkomponente (G(TS)) des Telefonsignals (TS) während einer Analyseperiode angeordnet sind, und als Ergebnis der Analyse zum Anpassen des ersten Anreizschwellwerts (OSW1) und des zweiten Anreizschwellwerts (OSW2) angeordnet sind, um eine zuverlässige Erkennung der Annahme des Anrufs durch die parallel geschaltete Kommunikationsanordnung (2) zu ermöglichen.

4. Anreizvorrichtung (14) nach Anspruch 1, wobei das Ende der Fehlerperiode (TF) als dann bestimmt wird, wenn die Anreizvorrichtung von ihrer Stromversorgung abgetrennt ist.

5. Anreizvorrichtung (14) nach Anspruch 1, wobei das Anreizmittel (18) zum Überprüfen des Vorhandenseins des Rufannahmezustands (EBI) angeordnet ist, der vorhanden ist, wenn N Freizeichenimpulse (RSI) im Freizeichen des Anrufs erkannt werden.

6. Anreizvorrichtung (14) nach Anspruch 1, wobei der Anreizdetektor (16) einen Spannungsvergleicher zum Vergleichen des Spannungswerts der Gleichstromkomponente (G(TS)) des Telefonsignals (TS) mit dem Spannungswert des ersten Anreizschwellwerts (OSW1) beziehungsweise des zweiten Anreizschwellwerts (OSW2) einschließt.

7. Verfahren zum Überprüfen, ob eine parallel zu einer das Verfahren implementierenden Anreizvorrichtung (14) mit einer Telefonleitung (TL) verbundene Kommunikationsanordnung (2) einen Anruf angenommen hat, in welchem Verfahren die folgenden Schritte ausgeführt werden:
- Erzeugen von Freizeichenerkennungsinformationen (RDI), wenn ein Freizeichen in einem Telefonsignal (TS) des Anrufs erkannt wird;
- Erzeugen erster Anreizerkennungsinformationen (ODI1), wenn der Spannungswert der Gleichstromkomponente (G(TS)) des empfangenen Telefonsignals (TS) unter einen ersten Anreizschwellwert (OSW1) abgefallen ist;
- Bestimmen des Vorhandenseins eines Rufannahmezustands (EBI), wenn eine Anzahl von Freizeichenimpulsen im Freizeichen des Anrufs erkannt wird;
- Bestimmen einer Fehlerperiode (TF), wenn Freizeichenimpulse (RSI) bei Vorhandensein erster Anreizerkennungsinformationen (ODI1) empfangen werden;
- Annehmen des Anrufs, wenn die ersten Anreizerkennungsinformationen (ODI1) nicht vorhanden sind; und
- Annehmen eines Anrufs während der Fehlerperiode (TF), wenn erste Anreizerkennungsinformationen (ODI1) vorhanden sind, selbst wenn der Anrufannahmezustand (EBI) zur gleichen Zeit wie die ersten Anreizerkennungsinformationen (ODI1) vorhanden ist.

8. Verfahren nach Anspruch 7, wobei die zweiten Anreizerkennungsinformationen (ODI2) erzeugt werden, wenn der Spannungswert der Gleichstromkomponente (G(TS)) des empfangenen Telefonsignals (TS) unter einen zweiten Anreizschwellwert (OSW2) abgefallen ist, und wobei der angenommene Anruf von der Anreizvorrichtung (14) zu der parallel geschalteten Kommunikationsanordnung (2) übertragen wird, wenn nach Annahme des Anrufs die zweiten Anreizerkennungsinformationen (ODI2) vorhanden sind und zumindest während der Fehlerperiode (TF) der angenommene Anruf nicht von der Anreizvorrichtung (14) zur parallel geschalteten Kommunikationsanordnung (2) zumindest während der Fehlerperiode (TF) übertragen wird, selbst wenn die zweiten Anreizerkennungsinformationen (ODI2) vorhanden sind.

9. Verfahren nach Anspruch 7, wobei während einer Analyseperiode die zeitabhängige Wellenform des Spannungswerts der Gleichstromkomponente (G(TS)) des Telefonsignals (TS) ausgewertet wird und als Ergebnis der Analyse der erste Anreizschwellwert (OSW1) und der zweite Anreizschwellwert (OSW2) zum zuverlässigen Erkennen der Annahme des Anrufs durch die parallel geschaltete Kommunikationsanordnung (2) angepaßt werden.

10. Erste Faksimilemaschine (1), die mit einer Telefonleitung (TL) zur Kommunikation mit einer weiteren zweiten mit einer Telefonleitung (TL) verbundenen Faksimilemaschine (4) verbunden werden kann, und umfassend Sender/Empfängermittel (13, 15) zum Senden und Empfangen von Telefaxdaten (FD), die einem Telefaxprotokoll entsprechen, wobei eine Anreizvorrichtung (14) nach Anspruch 1 zum Erkennen, ob eine parallel zu der ersten Faksimilemaschine (1) mit der Telefonleitung (TL) verbundene Kommunikationsanordnung (2) einen Anruf entgegengenommen hat, bereitgestellt wird.

11. Erste Faksimilemaschine (1) nach Anspruch 10, wobei ein Anzeigemittel (19) zum Anzeigen eines Warnsignals während der Fehlerperiode (TF) bereitgestellt ist.

## Revendications

1. Dispositif de détection de décrochage (14) qui peut être connecté à une ligne téléphonique (TL), pour détecter si un agencement de communication (2), qui est connecté à la ligne téléphonique (TL) en parallèle au dispositif de détection de décrochage (14) a accepté ou non un appel entrant, comprenant :
un détecteur de signal d'appel (17) adapté pour produire des informations de détection de signal (RDI) quand le détecteur de signal d'appel (17) détecte un signal d'appel dans un signal téléphonique (TS) de l'appel entrant, et
un détecteur de décrochage (16) adapté pour produire des informations de détection de décrochage (ODI1) quand la valeur de tension de la composante C.C. (G(TS)) du signal téléphonique reçu (TS) a chuté en dessous d'un premier seuil de décrochage (OSW1), et
**caractérisé en ce que** le dispositif de détection de décrochage (14) comprend
des moyens de décrochage (18) adaptés pour déterminer la présence d'une condition d'acceptation d'appel (EBI) quand un nombre d'impulsions de signal d'appel (RSI) est détecté dans le signal d'appel de l'appel entrant, et adaptés pour accepter l'appel entrant si les premières informations de détection de décrochage (ODI1) ne sont pas présentes durant une condition d'acceptation d'appel (EBI),
dans lequel le dispositif de détection de décrochage (14) est adapté pour déterminer une période d'erreur (TF) quand des impulsions de signal d'appel RSI sont reçues durant la présence de premières informations de détection de décrochage (ODI1), et adapté pour accepter un appel entrant durant la période d'erreur (TF), même si la condition d'acceptation d'appel (EBI) est présente simultanément aux premières informations de détection de décrochage (ODI1).

2. Dispositif de décrochage (14) selon la revendication 1, dans lequel le détecteur de décrochage (16) est agencé pour produire des secondes informations de détection de décrochage (ODI2) quand la valeur de tension de la composante C.C. (G(TS)) du signal téléphonique reçu (TS) a chuté en dessous d'un second seuil de décrochage (OSW2), - les moyens de décrochage (18) sont agencés pour transférer l'appel entrant accepté à l'agencement de communication connecté en parallèle (2) quand, après l'acceptation de l'appel entrant, les secondes informations de détection de décrochage (ODI2) sont présente, et les moyens de décrochage (18) sont agencés pour ne pas transférer l'appel entrant accepté depuis le dispositif de décrochage (14) à l'agencement de communication connecté en parallèle (2) au moins durant une période d'erreur (TF) même si les secondes informations de détection de décrochage (ODI2) sont présentes.

3. Dispositif de décrochage (14) selon la revendication 1, dans lequel des moyens d'adaptation de seuil (20) sont fournis, lesquels sont agencés pour analyser la forme d'onde dans le temps de la valeur de tension de la composante C.C. (G(TS)) du signal téléphonique (TS) durant une période d'analyse et à la suite de l'analyse sont agencés pour adapter le premier seuil de décrochage (OSW1) et le second seuil de décrochage (OSW2), afin de permettre une détection fiable de l'acceptation de l'appel entrant par l'agencement de communication connecté en parallèle (2).

4. Dispositif de décrochage (14) selon la revendication 1, dans lequel la fin de la période d'erreur (TF) est déterminée se produire quand le dispositif de décrochage est séparé de sa source d'alimentation.

5. Dispositif de décrochage (14) selon la revendication 1, dans lequel les moyens de décrochage (18) sont agencés pour vérifier la présence de la condition d'acceptation d'appel (EBI) qui existe quand N impulsions de signal d'appel (RSI) sont détectées dans le signal d'appel de l'appel entrant.

6. Dispositif de décrochage (14) selon la revendication 1, dans lequel le détecteur de décrochage (16) comporte un comparateur de tension adapté pour comparer la valeur de tension de la composante C.C. (G(TS)) du signal téléphonique (TS) à la valeur de tension du premier seuil de décrochage (OSW1) ou du second seuil de décrochage (OSW2), respectivement.

7. Procédé de détection si un agencement de communication (2), qui est connecté à une ligne téléphonique (TL) en parallèle à un dispositif de décrochage (14) mettant en oeuvre le procédé, a accepté ou non un appel entrant, dans lequel procédé les étapes suivantes sont exécutées :
production d'informations de détection de signal d'appel (RDI) quand un signal d'appel est détecté dans un signal téléphonique (TS) de l'appel entrant ;
production de premières informations de détection de décrochage (ODI1) quand la valeur de tension de la composante C.C. (G(TS)) du signal téléphonique reçu (TS) a chuté en dessous d'un premier seuil de décrochage (OSW1) ;
détermination de la présence d'une condition d'acceptation d'appel (EBI) quand un nombre d'impulsions de signal d'appel est détecté dans le signal d'appel de l'appel entrant ;
détermination d'une période d'erreur (TF) quand des impulsions de signal d'appel RSI sont reçues durant la présence de premières informations de détection de décrochage (ODI1),
acceptation de l'appel entrant si les premières informations de détection de décrochage (ODI1) ne sont pas présentes, et
acceptation d'un appel entrant durant la période d'erreur (TF) quand les premières informations de détection de décrochage (ODI1) sont présentes, même si la condition d'acceptation d'appel (EBI) est présente simultanément aux premières informations de détection de décrochage (ODI1).

8. Procédé selon la revendication 7, dans lequel des secondes informations de détection de décrochage (ODI2) sont produites quand la valeur de tension de la composante C.C. (G(TS)) du signal téléphonique reçu (TS) a chuté en dessous d'un second seuil de décrochage (OSW2) et dans lequel l'appel entrant accepté est transféré du dispositif de décrochage (14) à l'agencement de communication connecté en parallèle (2) quand, après l'acceptation de l'appel entrant, les secondes informations de détection de décrochage (ODI2) sont présente, et, au moins durant la période d'erreur (TF), l'appel entrant accepté n'est pas transféré du dispositif de décrochage (14) à l'agencement de communication connecté en parallèle (2) au moins durant la période d'erreur (TF) même si les secondes informations de détection de décrochage (ODI2) sont présentes.

9. Procédé selon la revendication 7, dans lequel durant une période d'analyse, la forme d'onde dans le temps de la valeur de tension de la composante C.C. (G(TS)) du signal téléphonique (TS) est analysée, et à la suite de l'analyse le premier seuil de décrochage (OSW1) et le second seuil de décrochage (OSW2) sont adaptés pour détecter fiablement l'acceptation de l'appel entrant par l'agencement de communication connecté en parallèle (2).

10. Première machine de télécopieur (1) pouvant être connectée à une ligne téléphonique (TL) pour communiquer avec une autre seconde machine de télécopieur (4) connectée à une ligne téléphonique (TL), et comprenant un moyen d'émetteur-récepteur (13, 15) pour transmettre et recevoir des données de télécopie (FD) qui correspondent à un protocole de télécopieur, dans laquelle un dispositif de décrochage (14) selon la revendication 1 est fourni pour détecter si un agencement de communication (2) connecté à la ligne téléphonique (TL) en parallèle à la première machine de télécopieur (1) a accepté ou non un appel entrant.

11. Première machine de télécopieur (1) selon la revendication 10, dans laquelle des moyens d'affichage (19) sont fournis pour afficher un signal d'avertissement durant la période d'erreur (TF).
